Europäisches Patentamt

(19) European Patent Office

Office européen des brevets

(11) EP 0 857 956 A1

(12) EUROPEAN PATENT APPLICATION

(43) Date of publication:
12.08.1998 Bulletin 1998/33

(51) Int. Cl.$^6$: G01K 13/02, G01K 1/16

(21) Application number: 98200043.2

(22) Date of filing: 09.01.1998

(84) Designated Contracting States:
AT BE CH DE DK ES FI FR GB GR IE IT LI LU MC NL PT SE
Designated Extension States:
AL LT LV MK RO SI

(30) Priority: 14.01.1997 NL 1005002

(71) Applicant: Rodax N.V.
2970 Schilde (BE)

(72) Inventor: Vermeulen, Marcel
2530 Boechout (BE)

(74) Representative: Bartelds, Erik
Arnold & Siedsma,
Advocaten en Octrooigemachtigden,
Sweelinckplein 1
2517 GK Den Haag (NL)

(54) Device for measuring a temperature

(57) The invention relates to a device for measuring the temperature of a fluid in a space such as a conduit or container, which is provided with a protective sleeve which is arranged in an opening in a wall of the space. The protective sleeve herein defines a receiving space for a temperature probe which is sealed relative to the fluid and comprises a membrane directed to the fluid and bounding the receiving space, and in the vicinity of which is arranged the temperature probe. The temperature probe can herein be connected to the heat-conducting membrane.

In the receiving space can be arranged means for supporting the membrane, which support means can be manufactured from a heat-insulating, for instance ceramic material.

FIG.1

EP 0 857 956 A1

Printed by Xerox (UK) Business Services
2.16.3/3.4

## Description

The invention relates to a device for measuring the temperature of a fluid present in a space bounded by at least one wall, such as a conduit or a container, provided with a protective sleeve for arranging in an opening in the wall and defining a receiving space sealed relative to the fluid for at least one temperature probe.

Such a device is generally known and is applied particularly in the processing industry for measuring the temperature of fluids flowing for instance in a conduit. Since these are often fluids which are aggressive or which are transported through a conduit at relatively high pressure, the temperature probe is received in a protective sleeve, also known as "thermo-well", which protrudes through the wall of the conduit and extends some distance into the flowing fluid. Because the protective sleeve is exposed to relatively high loads, particularly in the case of fast-flowing fluids or fluids under high pressure, it is embodied with a relatively thick wall. In this protective sleeve, which will often be manufactured from a high-quality and therefore costly material as a result of the aggressiveness of the fluids of which the temperature has to be measured, is then received the temperature probe which is connected to a processor unit which is arranged outside the conduit and by which the signals from the temperature probe are converted into a measurement value for the temperature. Many different sensors are herein used as temperature probe, such as thermocouples, resistance thermometers, thermistors and the like.

The known temperature measuring device has a number of drawbacks. As a result of the great wall thickness, the response time of such a device is very long. This implies that a change in the temperature in the fluid is detected and passed on only with great delay, which is of course undesirable in terms of regulating the process parameters. It is for instance known of a commonly used conventional type of temperature gauge with a drilled conical protective sleeve that the response time, depending on the nature of the fluid and the flow speed thereof, can vary between over 100 seconds and more than 1000 seconds. During this response time a fluid at incorrect temperature could therefore in principle be flowing through the conduit, whereby a large amount of product could be obtained with incorrect specifications.

Another problem is that the protective sleeve, as a consequence of the relatively great thickness of the wall thereof, forms a considerable thermal mass, whereby the correctness of the measurement is greatly influenced. A large quantity of heat is discharged by conduction through this thick wall into the wall of the conduit itself, whereby the temperature eventually detected at the position of the processor unit arranged outside the conduit differs greatly from the temperature of the fluid itself. It is known that the actual temperature of the fluid can be derived from the temperature detected outside the conduit with the relation:

$$T_{SG} = T_i - \frac{T_W - T_{SG}}{\cos h \, (m \cdot l)}$$

wherein $T_{SG}$ equals the static temperature of the fluid, $T_i$ is the temperature detected outside the conduit, and $T_W$ represents the temperature of the wall of the conduit, while h is a radiation coefficient, m is a factor which depends on the thermal conduction coefficient and the diameter of the sleeve, and l is the length over which the sleeve protrudes into the conduit. In order to bring the detected temperature as well as possible into conformity with the actual temperature in the conduit, it is important that the second term in this relation is as small as possible. For a given conduit and a given material of the sleeve this can be achieved by choosing the greatest possible insertion length. However, this has the drawback that the flow in the conduit is considerably affected thereby, particularly in comparatively narrow conduits. As a result of the great decrease in the effective diameter of the conduit, the flow resistance is greatly increased and large pressure drops will occur, thus entailing a considerable energy loss. In addition, a long insertion length results, particularly in conduits through which a fluid flows at high speed, in high loads on the protective sleeve, which will therefore have to be embodied with a relatively extra-thick wall, whereby the measurement results are once again adversely affected. Finally, a long insertion length entails comparatively high manufacturing costs when the protective sleeve must be manufactured from a high-quality or exotic material.

The invention therefore has for its object to provide a device for measuring the temperature of a fluid in a conduit or container, wherein the above stated drawbacks do not occur. According to the invention this is achieved in a device as described above in that the protective sleeve comprises at least one membrane directed to the fluid and bounding the receiving space, and the temperature probe is arranged in the vicinity of the membrane. By making use of a membrane to shield the temperature probe relative to the fluid a very short response time is obtained, since the membrane is of course thin and therefore has a very low thermal mass.

In order to also make the temperature measuring device suitable for use in situations wherein relatively high pressures occur, the device is preferably provided with means arranged in the receiving space for supporting the membrane. A sufficient sturdiness of the protective sleeve can thus still be obtained with a very thin-walled membrane.

In order to minimize as far as possible the influence of the protective sleeve on the temperature measurement, the support means are preferably manufactured from a heat-insulating material, for instance a ceramic material, wherein they can moreover enclose, together with the membrane, one or more air chambers. In this manner the temperature probe can be completely insulated from the rest of the device, whereby very accurate measurement values are obtained.

Further preferred embodiments of the invention are described in the sub-claims.

The invention is now elucidated on the basis of a number of embodiments, wherein reference is made to the annexed drawing, in which:

fig. 1 shows a partly sectional perspective view of a temperature measuring device according to the invention,

fig. 2-4 show partly cut-away side views of different arrangements for measuring the temperature in a conduit, respectively according to the prior art and making use of a temperature sensor according to the invention, and

fig. 5 is a sectional view of a temperature sensor according to the invention which is arranged flat-lying in the wall of the conduit.

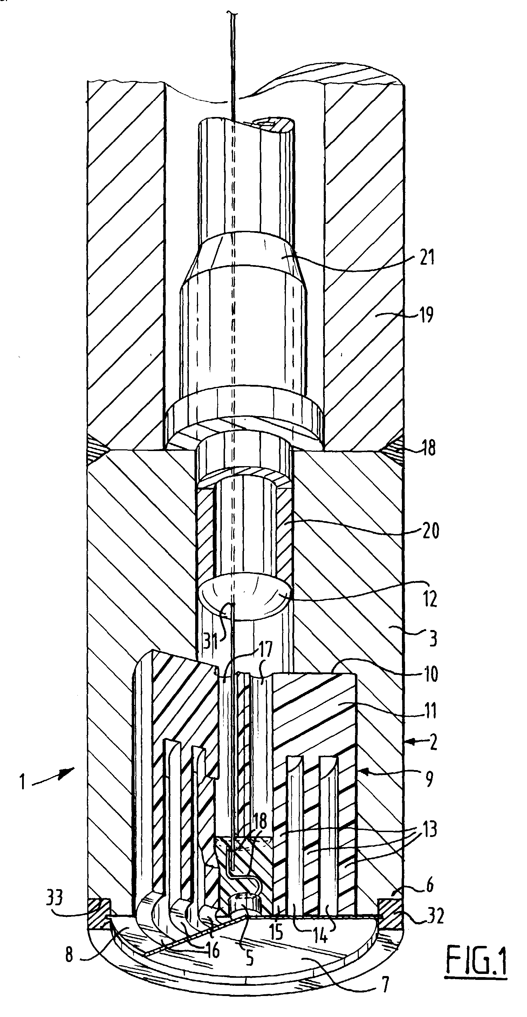

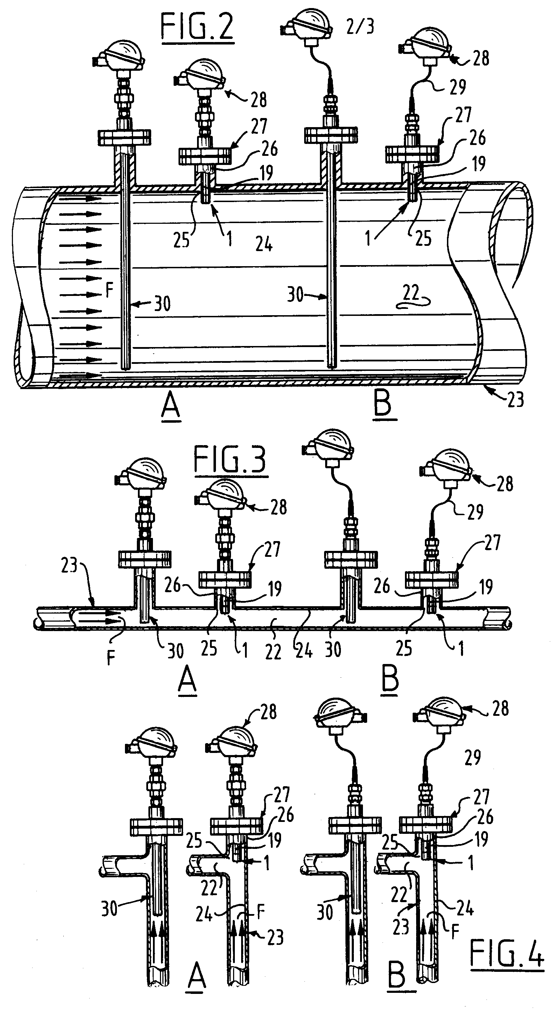

A device 1 for measuring the temperature of a fluid F flowing through a space 22 bounded by a wall 24, such as a conduit 23 (fig. 2), is provided with a protective sleeve 2 which can be arranged in an opening 25 in the wall. Protective sleeve 2 herein has a wall 3 which defines a space 4 which is sealed relative to fluid F and in which is received a temperature probe 5 (fig. 1). At one end 6 of sleeve 2 the wall 3 is replaced by a thin membrane 7 with a thickness in the order of several tenths of a millimetre which rests against a supporting edge 8 of sleeve 2. Membrane 7 is herein arranged in a ring 32 which is fixedly welded to an end surface 33 of protective sleeve 2. The temperature probe 5 is situated in the immediate vicinity of membrane 7 and can be attached thereto, for instance using an effectively conducting adhesive. The membrane 7 is also manufactured from a material with good heat conduction, such as for instance a metal.

In order to prevent membrane 7 being pressed into the conduit 23 at high pressure, support means 9 are present in the receiving space 4 in the form of a base 11 which rests against a shoulder 10 formed in the relatively thick casing 3 of sleeve 2 and which is further provided with ribs 13 which extend as far as membrane 7 and which support membrane 7 with their end surfaces 16. Membrane 7 is thus supported over practically its full surface, whereby the danger of it being pressed in is obviated.

Air chambers 14 are moreover defined by the ribs 13 which take the form of concentric rings, which chambers are closed off by membrane 7. The stationary air in these chambers 14 forms a very good insulator. Because the support means 9 are themselves also manufactured from a well-insulating material, such as for instance a ceramic material, the temperature probe 5 is fully insulated from the rest of the temperature measuring device 1. The innermost annular rib 13 otherwise defines a cylindrical space 15 in which the temperature probe 5 is received. This space can further be filled with an insulating material, for instance RDX301. The only connection between temperature probe 5 and the rest of device 1 is then formed by connecting wires 18 which are led through channels 17 in support member 11 to the narrow portion of receiving space 4 and there carried through an opening 31 in a cover 12 into an inner tube 20 which is fixed to protective sleeve 2 by means of a weld connection. Through this inner tube 20 the connecting wires 18 are eventually carried to the detection and processor unit 28, where a measurement value for the temperature is determined on the basis of the signals from the temperature probe 5.

Depending on the desired insertion length, the protective sleeve 2 can be extended by means of an auxiliary tube 19 to be connected thereto by a weld 18. However, because the temperature probe 5 is very well insulated from the rest of the device and the measurement will thus be relatively accurate, insertion lengths will generally be necessary which are considerably smaller than for temperature measuring devices according to the prior art. This is shown in fig. 2-4, where for different conduits 23 temperature measuring devices according to the prior art 30, on the left in each case, are compared with measuring devices according 1 to the invention. The measuring device 1 according to the invention is herein received in an opening 25 in the wall 24 of conduit 23 in a drain line 26. Measuring device 1 is connected on one side to the conduit 23 in pressure-resistant and liquid-tight or gas-tight manner by means of a flange connection 27 and on the other side to a temperature detecting or processing unit 28. This can be arranged directly onto the measuring device 1 (fig. 2A, 3A, 4A) or be connected to the sensor by means of a wire connection 29 (fig. 2B, 3B, 4B). Shown clearly in all cases is that the temperature measuring device 1 according to the present invention makes it possible to suffice with a considerably shorter insertion length than the temperature measuring devices 30 of the prior art, whereby the flow of the fluid F in conduit 23 is thus hardly disrupted.

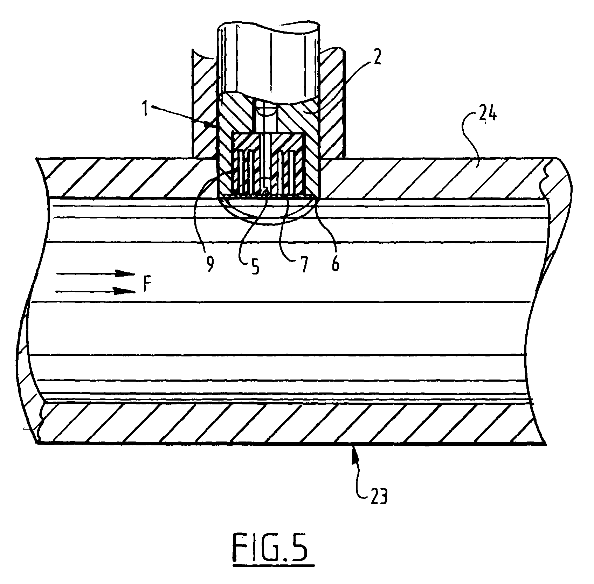

In another embodiment (fig. 5), the temperature measuring device 1 is even arranged in wholly flush manner in the wall 24 of conduit 23. This has the advantage that no disruption of the flow in the conduit occurs, so that no areas are created where the flow speed is decreased or locally even becomes zero, and which could form a breeding ground for instance for contaminants, bacteria and the like. This embodiment is therefore particularly suitable for use in the food processing industry.

The invention is not limited to the above stated embodiments but can be modified in many ways. More than one temperature probe 5 could for instance be arranged in protective sleeve 2. Membrane 7 could also be arranged at a different location in sleeve 2, while the configuration of the support means 9 could also be chosen differently. The scope of the invention is therefore defined exclusively by the annexed claims.

## Claims

1. Device (1) for measuring the temperature of a fluid (F) present in a space (22) bounded by at least one wall (24), such as a conduit (23) or a container, provided with a protective sleeve (2) for arranging in an opening (25) in the wall (24) and defining a receiving space (4) sealed relative to the fluid (F) for at least one temperature probe (5), **characterized in that** the protective sleeve (2) comprises at least one membrane (7) directed to the fluid (F) and bounding the receiving space (4), and the temperature probe (5) is arranged in the vicinity of the membrane (7).

2. Device (1) as claimed in claim 1, **characterized in that** the temperature probe (5) is connected to the membrane (7).

3. Device (1) as claimed in claim 1 or 2, **characterized in that** the membrane (7) is manufactured from a heat-conducting material.

4. Device (1) as claimed in any of the foregoing claims, **characterized by** means (9) arranged in the receiving space (4) for supporting the membrane (7).

5. Device (1) as claimed in claim 4, **characterized in that** the support means (9) are connected to and support against the protective sleeve (2).

6. Device (1) as claimed in claim 4 or 5, **characterized in that** the support means (9) are manufactured from a heat-insulating material.

7. Device (1) as claimed in claim 6, **characterized in that** the support means (9) are manufactured from a ceramic material.

8. Device (1) as claimed in any of the claims 4-7, **characterized in that** the support means (9) enclose with the membrane (7) at least one air chamber (14).

9. Device (1) as claimed in claim 8, **characterized in that** the support means (9) take the form of a base (11) having a number of ribs (13) extending from the base (11) to the membrane (7).

10. Device (1) as claimed in claim 9, **characterized in that** the membrane (7) is circular and the ribs (13) form concentric rings.

FIG.1

FIG.2

FIG.3

FIG.4

FIG.5

European Patent
Office

**EUROPEAN SEARCH REPORT**

Application Number

EP 98 20 0043

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 3 754 201 A (ADAMS R) 21 August 1973 * column 2, line 31 - column 3, line 3; figures * | 1-3 | G01K13/02 G01K1/16 |
| X | JP 61 120 931 A (YOSHIHARU TANIGUCHI) 9 June 1986 * the whole document * | 1 | |
| A | JP 60 047 932 A (MATSUSHITA DENKI SANGYO KK) 15 March 1985 * the whole document * | 1 | |
| X | US 2 483 350 A (W.R. POLYE E.A.) 27 September 1949 * column 2, line 6 - line 11; figures * | 1-3 | |
| A | US 4 318 073 A (ROSSLER JR FREDERICK W ET AL) 2 March 1982 * the whole document * | 1,4,6 | |
| A | DE 12 91 540 B (SIEMENS AG) 27 March 1969 * the whole document * | 8-10 | TECHNICAL FIELDS SEARCHED (Int.Cl.6) G01K |

The present search report has been drawn up for all claims

| Place of search | Date of completion of the search | Examiner |
|---|---|---|
| THE HAGUE | 9 April 1998 | Ramboer, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document